(19) Europäisches Patentamt
European Patent Office
Office européen des brevets

(11) **EP 3 022 573 B1**

(12) **FASCICULE DE BREVET EUROPEEN**

(45) Date de publication et mention
de la délivrance du brevet:
**03.01.2018 Bulletin 2018/01**

(21) Numéro de dépôt: **14742178.8**

(22) Date de dépôt: **15.07.2014**

(51) Int Cl.:
***G01S 3/74*** *(2006.01)*

(86) Numéro de dépôt international:
**PCT/EP2014/065154**

(87) Numéro de publication internationale:
**WO 2015/007734 (22.01.2015 Gazette 2015/03)**

(54) **DISPOSITIF DE DETECTION DE SIGNAUX ELECTROMAGNETIQUES**

VORRICHTUNG ZUR ERKENNUNG VON ELEKTROMAGNETISCHEN SIGNALEN

DEVICE FOR DETECTING ELECTROMAGNETIC SIGNALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.07.2013 FR 1301719**

(43) Date de publication de la demande:
**25.05.2016 Bulletin 2016/21**

(73) Titulaire: **Thales
92400 Courbevoie (FR)**

(72) Inventeurs:
• **CORNIC, Pascal**
**F-29820 Guilers (FR)**
• **LE BIHAN, Patrick**
**F-29870 Lannilis (FR)**
• **LEVAUFRE, Régis**
**F-22140 Cavan (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
**FR-A1- 2 805 614**

• **BURTNYK N ET AL: "A Wide Aperture Sampling Linear Array for Direction Finding", IEEE TRANSACTIONS ON ANTENNAS AND PROPAGATION,, vol. AP-12, no. 3, 1 mai 1964 (1964-05-01) , pages 248-256, XP001388857,**
• **WEI WU ET AL: "Switched-Element Direction Finding", IEEE TRANSACTIONS ON AEROSPACE AND ELECTRONIC SYSTEMS, IEEE SERVICE CENTER, PISCATAWAY, NJ, US, vol. 45, no. 3, 1 juillet 2009 (2009-07-01), pages 1209-1217, XP011277363, ISSN: 0018-9251, DOI: 10.1109/TAES.2009.5259194**

## Description

La présente invention concerne un dispositif de détection de signaux électromagnétiques. Le domaine de l'invention est celui de la séparation et de la localisation de sources électromagnétiques à partir d'antennes de type réseau. Le domaine d'exploitation couvre potentiellement l'ensemble du domaine des récepteurs de signaux électromagnétiques. Plus particulièrement, l'invention concerne le domaine des intercepteurs électromagnétiques de type actif ou passif, dans lesquels on cherche à la fois une large couverture angulaire instantanée et une capacité de séparation angulaire importante, en particulier pour discriminer les signaux reçus de faible puissance et à impulsions de longue durée en environnement dense.

Dans ce contexte, un problème technique à résoudre est la minimisation du nombre de voies de réception dans un dispositif d'antenne de type réseau, ayant pour objectif de réduire à la fois la complexité, le volume de calcul à effectuer et finalement le coût.

Le problème est habituellement résolu par des techniques de formation de faisceaux par le calcul ou par des techniques d'interférométrie.

Un pouvoir séparateur angulaire important nécessite un faisceau d'antenne étroit et donc une grande antenne. Ainsi, plus le pouvoir séparateur angulaire exigé par une application est important, plus la dimension L de l'antenne doit être importante. En effet l'ouverture de l'antenne, notée $\Delta\theta$, une fois focalisée est, pour une longueur d'onde $\lambda$, typiquement de la forme $\Delta\theta = \lambda/L$ en radians, donc inversement proportionnelle à la dimension L.

La grande dimension de l'antenne conduit alors utiliser un grand nombre d'éléments rayonnant constituant cette antenne.

Ces éléments rayonnants doivent être espacés entre eux d'une fraction de longueur d'onde, typiquement $\lambda/2$ pour une couverture angulaire totale de 90°. Cette condition est en effet nécessaire pour éviter les ambiguïtés de direction angulaire. Ainsi pour une antenne d'ouverture 1/N, le nombre d'éléments rayonnant sera en général typiquement de 2N pour une antenne linéaire et de $4N^2$ pour une antenne surfacique. A chaque élément rayonnant correspond un récepteur, ce qui conduit à une grande complexité et à un coût élevé.

Il existe une solution permettant de diminuer le nombre de récepteurs en faisant appel à des antennes dites « lacunaires » ou encore à des réseaux d'interférométrie ambigus.

En ce qui concerne les antennes lacunaires, les dégradations du diagramme de rayonnement augmentent en fonction du taux de lacunarité, ce qui en pratique ne permet pas de diminuer le nombre de récepteurs de façon significative.

En ce qui concerne les antennes interférométriques, elles permettent d'obtenir de bonnes précisions de localisation avec un faible nombre d'éléments rayonnants, la valeur de la précision étant inversement proportionnelle à la dimension de l'antenne. Cependant elles nécessitent de lever les ambiguïtés de mesure de direction angulaire à l'aide d'au moins deux bases d'interférométrie de dimensions différentes. Cette méthode de levée d'ambiguïté peut être mise en échec lorsque la densité de signaux à traiter est importante ou lorsque le rapport signal sur bruit est faible. En présence de signaux de longue durée, par exemple de type LPI (« Low Probability of Intercept »), le risque de superposition temporelle de signaux augmente, ce qui complique encore l'analyse des signaux reçus.

Il peut alors devenir impossible de séparer les signaux par leur direction ou d'estimer cette direction d'arrivée.

Un document FR 2 805 614 A1 décrit un dispositif de détection de signaux électromagnétiques.

Un but de l'invention est de pallier les inconvénients précités, à cet effet l'invention a pour objet un dispositif de détection de signaux électromagnétiques comportant une antenne de réception réseau à N éléments rayonnants et comportant M voies de réception en aval de l'antenne de réception, M étant inférieur à N, les directions de pointage de ladite antenne, en nombre égal au nombre N d'éléments rayonnants, étant obtenues par formation de faisceau par le calcul et étant régulièrement espacées, ledit dispositif comportant par ailleurs au moins :

- des moyens de commutation des M voies de réception sur les éléments rayonnants selon des cycles de séquences successives, M éléments rayonnants étant connectés auxdites voies de réceptions à chaque séquence, un même élément rayonnant dit de référence étant connecté auxdites voies de réception pour toutes les séquences, un cycle étant achevé lorsque tous les éléments rayonnants ont été connectés au moins une fois à une desdites voies de réception ;
- des moyens de traitement effectuant pour chaque séquence l'estimation des corrélations spatiale deux à deux du signal reçu sur la voie de référence et des signaux reçus sur les autres M-1 voies de réception puis estimant la densité spectrale de puissance spatiale dans N directions d'arrivée à partir d'une somme cohérente des N termes de corrélations ainsi obtenus.

Le réseau d'éléments rayonnant étant linéique, l'élément de référence est par exemple le premier élément, les M premiers éléments étant connectés aux voies de réception dans la première séquence, puis les M-1 éléments rayonnant étant connectés aux voies de réceptions dans la deuxième séquence, et ainsi de suite.

Dans un mode de réalisation possible, les moyens de traitement estiment les corrélations spatiales après avoir effectué l'élimination des signaux de courte durée stationnaire de durée inférieure à une durée $\tau$ donnée, l'élimination

des signaux de courte durée stationnaire étant effectuée en multipliant le signal reçu à un instant t, x(t), par un signal de la forme x(t)x(t-τ)/x(t)$^{*2}$, où τ est un retard choisi pour supprimer les signaux de durée inférieure à la durée τ.

Dans chaque séquence, ladite corrélation spatiale est par exemple estimée en multipliant directement le signal reçu sur ledit élément rayonnant de référence par le signal reçu conjugué sur un autre élément rayonnant de l'antenne.

Dans un autre mode de réalisation possible, dans chaque séquence, ladite corrélation spatiale est estimée en multipliant le signal reçu sur ledit élément rayonnant de référence par le signal reçu conjugué sur un autre élément rayonnant de l'antenne, après séparation fréquentielle desdits signaux reçus. Dans chaque séquence, ladite corrélation spatiale est par exemple estimée en multipliant le signal reçu sur ledit élément rayonnant de référence par le signal reçu conjugué sur un autre élément rayonnant de l'antenne, l'estimation de corrélation étant effectuée en sortie de bancs de filtres de différentes largeurs et de différentes fréquences centrales.

Les filtres sont par exemple réalisés par transformées de Fourrier numérique d'ordres différents ou par filtres polyphasés d'ordres différents.

Le dispositif est par exemple un radar. Dans ce cas, dans chaque séquence, ladite corrélation spatiale est par exemple estimée en multipliant le signal reçu sur ledit élément rayonnant de référence par le signal reçu conjugué sur un autre élément rayonnant de l'antenne, après séparation temporelle desdits signaux reçus.

La séparation temporelle est par exemple obtenue par filtrage adapté et échantillonnage des impulsions reçues par ledit radar.

D'autres caractéristiques et avantages de l'invention apparaîtront à l'aide de la description qui suit faite en regard de dessins annexés qui représentent :

- la figure 1, par un schéma synoptique, un réseau d'antenne linéique comportant N éléments rayonnant ;
- la figure 2, un diagramme d'antenne relatif à un dispositif du type de celui de lafigure 1 ;
- la figure 3, un exemple de dispositif d'interférométrie ;
- les figures 4a et 4b, un diagramme d'antenne obtenu respectivement par un interféromètre ambigu et par un interféromètre non ambigu ;
- la figure 5, une illustration du principe de l'invention ;
- la figure 6, par un synoptique, un premier exemple de réalisation d'un dispositif selon l'invention ;
- la figure 7, un exemple de réalisation des moyens de commutations utilisés dans un dispositif selon l'invention ;
- la figure 8, un autre exemple de réalisation d'un dispositif selon l'invention.

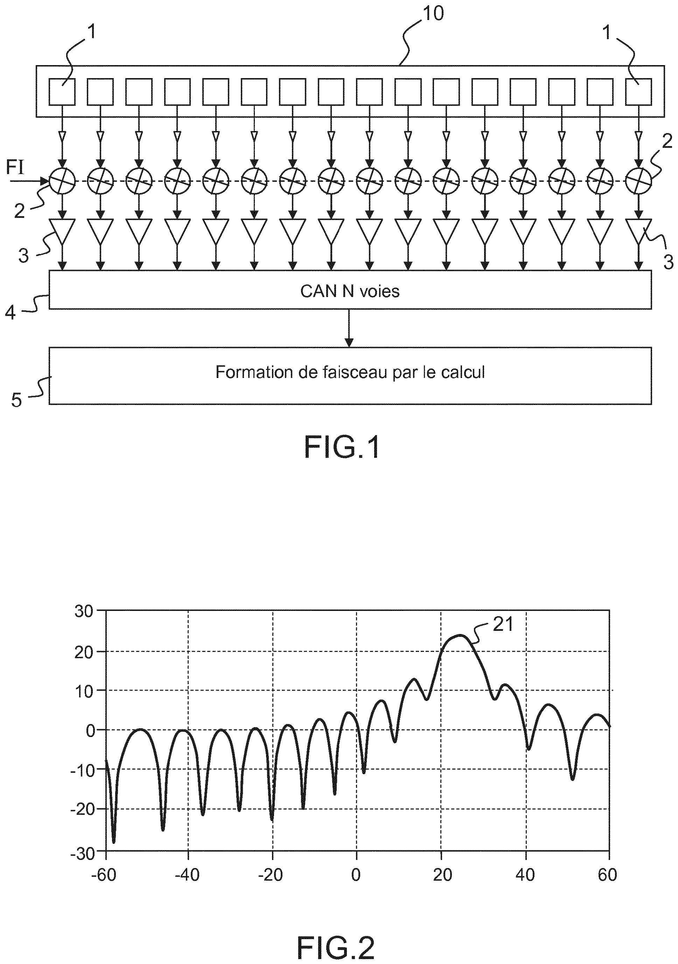

La figure 1 représente, par schéma synoptique, un réseau d'antenne linéique comportant N élément rayonnants. L'invention s'applique à une antenne surfacique, de dimension 2, ou à une antenne linéique, de dimension 1, comme celle illustrée par la figure 1. A titre d'exemple, l'invention sera décrite par la suite pour une antenne linéique.

Le réseau 10 comporte N éléments rayonnants 1 espacés entre eux d'une demi-longueur d'onde. Dans un récepteur à formation de faisceaux par le calcul, chaque élément rayonnant 1 est connecté à un récepteur effectuant l'amplification, le filtrage et la transposition en fréquence du signal reçu avant codage. Ainsi en réception pour effectuer la transposition de fréquence, chaque élément rayonnant 1 est connecté à une entrée d'un mélangeur hyperfréquence 2, l'autre entrée du mélangeur recevant une fréquence intermédiaire. La sortie d'un mélangeur 2 est connectée à l'entrée d'un amplificateur faible bruit 3. Les amplificateurs 3 sont connectés en sortie à l'entrée d'un codeur 4 à N voies. Ce dernier assure la conversion analogique-numérique des signaux issus des amplificateurs. Les signaux reçus et codés sont traités simultanément par une unité de traitement 5 pour former les faisceaux.

L'opération de formation de faisceaux par le calcul consiste à sommer de façon cohérente l'ensemble des signaux $x_i$ reçus pour chaque direction de pointage du faisceau. Elle peut s'écrire selon la relation (1) suivante, S représentant l'amplitude du signal, fonction de la direction de visée et de la période d'échantillonnage :

$$S(\theta_k, nT_r) = \sum_{i=0}^{N-1} x_i(nT_r) \exp^{\frac{2.j.\pi.i.d.\sin(\theta_k)}{\lambda}} \qquad (1)$$

où :

- $\theta_k$ est l'angle de visée dans la direction kθ ($\theta_k$=kθ) ;
- $T_r$ est la période d'échantillonnage des signaux reçus, à la réception au niveau des codeurs 4 ;
- $n$ est l'indice de l'instant d'échantillonnage auquel est effectuée la formation de faisceau ;
- $i$ est l'indice de l'élément rayonnant ;
- $d$ la distance entre deux éléments rayonnants successifs ;
- $\lambda$ la longueur d'onde du signal ;

D'autre part, les directions de pointage sont régulièrement espacées et leur nombre est égal au nombre N d'éléments rayonnants du réseau. Dans ces conditions, la formation de faisceau correspond simplement à une transformée de Fourier et peut s'écrire selon la relation (2) ci-dessous :

$$S(\theta_k, nT_r) = \sum_{i=0}^{N-1} x_i(nT_r) \exp^{-\frac{2.j.\pi.i.k}{N}} \qquad (2)$$

où la fréquence $f_k$ et le temps $t$ s'expriment de la façon suivante :

$$f_k = \frac{\sin \theta_k}{\lambda}$$

$$t = i.d$$

L'indice $k$ correspond à l'indice de la direction d'arrivée $\theta_k$ dans laquelle on souhaite former un faisceau. Quand $\sin\theta = \lambda k/Nd$, on obtient un maximum dans la direction $\theta_k$.

Le dispositif illustré par la figure 1 permet ainsi de former N faisceaux directifs, d'ouverture typique égale à 2/N radians, sans ambiguïté et avec des niveaux de lobes secondaires ajustables par pondération numérique. Ce dispositif permet donc de séparer angulairement les sources d'émission et de les localiser avec une grande efficacité.

La figure 2 présente par une courbe 21 un exemple de diagramme d'antenne obtenu sans pondération pour un dispositif du type de la figure 1, pour un pointage particulier, les ordonnées représentant le gain en dB et les abscisses la position angulaire.

Malheureusement un tel dispositif peut s'avérer très complexe, en particulier lorsque le nombre de voies est grand du fait d'une fréquence d'échantillonnage élevée et/ou d'une ou plusieurs des exigences suivantes :

-    résolution angulaire fine ;
-    couverture angulaire importante ;
-    fréquence RF élevée.

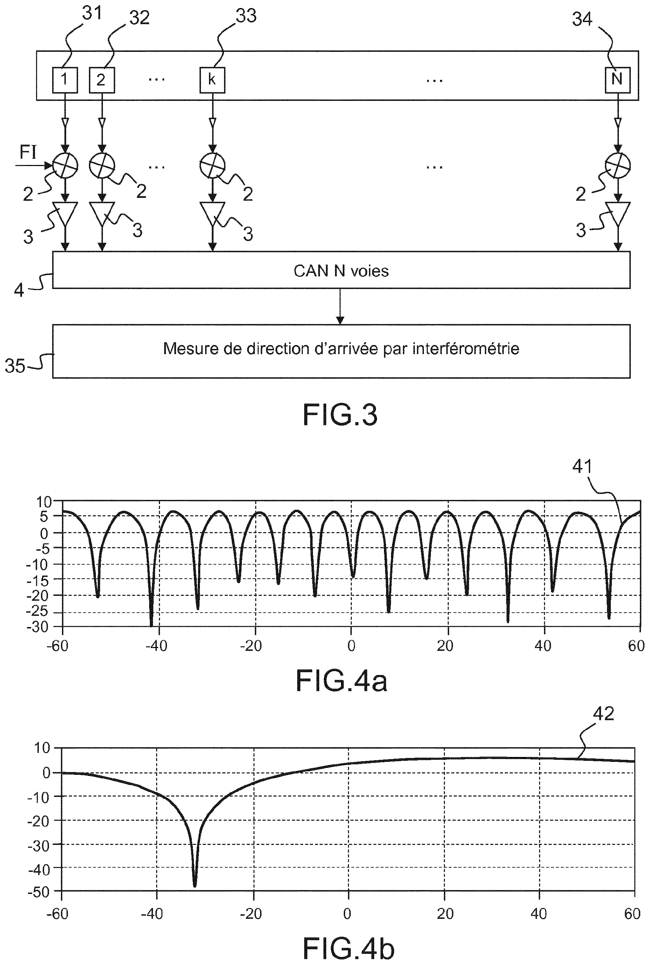

Par exemple, dans un dispositif passif d'interception des signaux radar, ces conditions se trouvent réunies, ce qui rend très compliqué la mise en oeuvre d'une telle solution. C'est notamment une raison pour laquelle on utilise généralement des bases interférométriques, conformément à la figure 3, afin de localiser angulairement les différentes sources d'émission dans un vaste domaine angulaire.

La figure 3 présente donc un dispositif formé de bases interférométriques, utilisé pour localiser angulairement les différentes sources d'émission dans un domaine angulaire important.

Dans un tel dispositif, au moins une mesure très précise mais ambiguë est réalisée par une base de grande dimension constituées par les éléments d'antenne les plus éloignés, et au moins une mesure non ambiguë mais peu précise est réalisée par une base constituée par les deux éléments d'antennes les plus proches. Le dispositif de la figure 3 comporte quatre éléments rayonnant 31, 32, 33, 34, sachant que trois éléments au moins pourraient suffire pour effectuer une mesure de direction d'arrivée de signaux par interférométrie. En considérant la distance élémentaire d, formant un pas, et en considérant par ailleurs la position du premier élément 31 comme position d'origine, le deuxième élément est alors à la position d, le troisième éléments à une position kd et le quatrième élément placé à une position Nd. Les éléments rayonnants sont connectés chacun à un mélangeur 2, recevant sur une autre entrée une fréquence FI issue d'un oscillateur local, suivi d'un amplificateur faible bruit 3 de façon analogue au dispositif de la figure 1. Les signaux issus des amplificateurs 3 sont ensuite convertis numériquement par un convertisseur analogique-numérique 4 à plusieurs voies, de même type par exemple que celui de la figure 1. Les signaux ainsi numérisés sont pris en compte par des moyens de traitement 35 pour la mesure de direction d'arrivée par interférométrie.

La combinaison des mesures de phases obtenues sur les différentes bases, constituées des éléments rayonnant 31, 32, 33, 34, permet de lever l'ambiguïté de la mesure.

Typiquement, en considérant le schéma synoptique de la figure 3, il est possible pour une longueur d'onde donnée $\lambda$, d'estimer les différences de phase suivantes, respectivement entre le premier élément et les éléments aux positions d, kd et Nd :

$$\Phi_1 - \Phi_2 = \frac{2\pi d \sin(\theta)}{\lambda}$$

$$\Phi_1 - \Phi_k = \frac{2\pi dk \sin(\theta)}{\lambda}$$

$$\Phi_1 - \Phi_N = \frac{2\pi dN \sin(\theta)}{\lambda}$$

puis d'en déduire après levée d'ambiguïté conforme aux méthodes connues de l'homme de l'art, d'en déduire la direction d'arrivée du signal θ.

Le dispositif de la figure 3 qui ne comprend qu'un faible nombre de voies de réception est beaucoup plus simple que celui de la figure 1. Cependant, s'il permet de localiser les différentes directions d'arrivée de signaux issus de sources d'émission avec une bonne précision, il ne permet généralement pas à lui seul de séparer ces différentes sources d'émission, et peut être mis en échec si le rapport signal à bruit n'est pas suffisant.

Les figures 4a et 4b représentent respectivement un diagramme d'antenne obtenu respectivement par un interféromètre ambigu et par un interféromètre non ambigu. Plus particulièrement la courbe 41 de la figure 4a représente le diagramme d'antenne pour un interféromètre constitué des deux bases 31, 34 les plus éloignées, étant distancées de Nd, dans un système d'axes où les ordonnées représentent le gain d'antenne et les abscisses l'angle θ. La courbe 42 de la figure 4b représente le diagramme d'antenne pour un interféromètre constitué des deux bases 31, 32 les plus rapprochées, distancées de d, dans le même système d'axes.

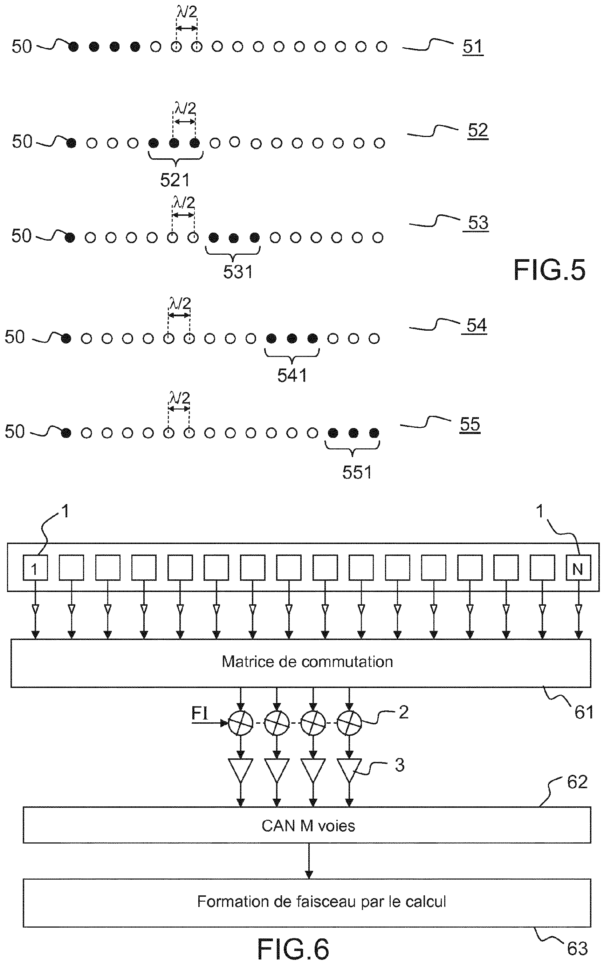

Le principe de l'invention est illustré par la figure 5. Selon l'invention, à partir d'un dispositif du type de celui de la figure 1, à N éléments rayonnants, on réduit le nombre de récepteur de N à M, M étant inférieur à N, en commutant les M récepteurs d'une certaines façon sur les différents éléments rayonnants 1, au cours du temps. Dans la suite de la description, on prendra à titre d'exemple M = 4 et N = 16. Les M récepteurs forment ce que l'on appellera par la suite le dispositif de réception.

A condition de connecter chaque élément rayonnant au dispositif de réception au moins une fois pendant le temps d'observation, il est alors possible de séparer les signaux d'arrivée stationnaire pendant le temps d'observation selon N faisceaux directifs conformément au résultat obtenu par une formation de faisceau par le calcul conventionnelle.

La figure 5 illustre un exemple de séquences de commutation 51, 52, 53, 54, 55 incluses dans le temps d'observation permettant connecter au moins une fois chaque élément rayonnant au dispositif de réception. Les différentes séquences illustrées représentent la position des N récepteurs, 16 dans l'exemple de la figure 5, les récepteurs repérés par un point noir étant ceux qui sont connectés au dispositif de réception. Les éléments sont par exemples espacés entre eux d'une distance λ/2.

Pour toutes les séquences, le premier élément rayonnant 50 est en connecté au dispositif de réception. Ce premier élément 50 constitue ainsi l'élément de référence. Il n'est pas nécessaire de prendre le premier élément 50 comme élément de référence, d'autres éléments du réseau pourraient constituer un élément de référence, pourvu que cet élément soit connecté au dispositif de connexion à chaque séquence.

Dans la première séquence 51, les M premiers éléments sont connectés au dispositif de commutation. Dans la deuxième séquence 52, le premier élément 50 est connecté et les M-1 éléments suivants 521 sont connectés. Dans la troisième séquence 53, le premier élément 50 est connecté et les M-1 éléments suivants 531 sont connectés. Dans la quatrième séquence 54, le premier élément 50 est connecté et les M-1 éléments suivants 541 sont connectés. En fin, dans la dernière séquence, le premier élément 50 est connecté et les M-1 éléments suivants 551 sont connectés. Ces derniers M-1 éléments 551 sont les M-1 éléments du réseau à N éléments, N étant égal à 16 et M étant égal à 4.

Le mode de connexion des éléments au dispositif de réception illustré par la figure 5 a l'avantage d'être particulièrement simple à mettre en oeuvre. D'autres modes de connections sont bien sûr possibles pourvu qu'ils permettent que chaque élément au moins soit connecté au cours de l'ensemble des séquences 51, 52, 53, 54, 55.

A chaque séquence on calcule l'espérance mathématique du produit du signal reçu sur l'élément d'antenne de référence par le complexe conjugué de chacun des signaux reçus des M-1 autres éléments d'antennes connectés au dispositif de réception, soit pour i compris entre 1 et M :

$$R_x(i, nT_r) = E\left[x_1(nT_r) x_{i+1}^*(nT_r)\right] \qquad (3)$$

Où:

$x_1(nTr)$ est le signal reçu sur la voie 1 à la date nTr, Tr étant la période d'échantillonnage précédemment définie ;

$x_{1+i}(nTr)$ est le signal reçu sur la voie i+1 à la date nTr, $x^*_{1+i}(nTr)$ étant son conjugué ;

E[x] représente l'espérance mathématique sur nTr échantillons temporels à partir d'une position pTr :

$$E\big[x(p.nT_r)\big] = \frac{1}{n} \sum_{l=0}^{n-1} x(pT_r + l.T_r) \qquad (4)$$

$R_x(i,nTr)$ représente la corrélation entre le signal reçu de la voie 1 et le complexe conjugué du signal reçu de la voie i+1 à la date nTr.

En supposant que le signal est stationnaire, à bande étroite vis-à-vis de la porteuse, et que l'amplitude du signal reçu et sa direction d'arrivée sont constantes pendant le temps d'observation, on peut considérer que la corrélation entre les signaux reçus de deux éléments rayonnants quelconques est invariante au cours du temps, au bruit de mesure près. Ainsi, quels que soient les instants temporels nTr et pTr :

$$R_x(i,nT_r) = R_x(i,p.nT_r) = R_x(i) \qquad (5)$$

Et pour un signal reçu d'amplitude A, de longueur d'onde $\lambda$ et de direction d'arrivée $\theta$, la corrélation $R_x(i)$ s'exprime comme suit :

$$R_x(i) = A^2 \exp^{-\frac{2.j.\pi.i.d.\sin(\theta)}{\lambda}} \qquad (6)$$

On peut alors estimer la densité spectrale $S(\theta_k)$ de puissance spatiale dans un filtre spatial de direction $\theta_k$ selon la relation suivante :

$$S(\theta_k) = \sum_{i=0}^{N-1} R_x(i) \exp^{-\frac{2.j.\pi.i.k}{N}} \qquad (7)$$

$k$ ayant été défini relativement à la relation (2).

Il est à remarquer que, même si l'amplitude du signal A n'est pas rigoureusement constante au cours du temps, la formation de faisceau reste possible, avec cependant une dégradation de la résolution spatiale.

La figure 6 présente par un synoptique un exemple de réalisation d'un dispositif selon l'invention dans le cas où le dispositif de réception comporte quatre récepteurs, soit M = 4, dispositif auquel peut s'appliquer les séquences de la figure 5. Le dispositif comporte un réseau 10 de N éléments rayonnant 1, N étant égal à 16. Les éléments rayonnant sont reliés au dispositif de réception via une matrice de commutation 61 permettant de réaliser les différentes séquences de commutation, par exemples les séquences 51, 52, 53, 54, 55 décrites précédemment. La sortie de la matrice de commutation est reliée aux quatre récepteurs, chaque récepteur comportant au moins un mélangeur 2, transposant le signal reçu à une fréquence intermédiaire FI, et un amplificateur 3. Les signaux en sortie d'un récepteur sont numérisés par un convertisseur analogique-numérique 62 à M voies. Les signaux de réception numérisés sont traités par des moyens de traitement 63 effectuant les calculs définis aux relations (3) à (7) définies précédemment. Les moyens de traitement peuvent être réalisés par un circuit de type FPGA ou encore par un processeur de traitement du signal.

En cas d'application des séquences se la figure 5, les moyens de traitement calculent les corrélations $R_x(i)$ comme indiqué ci-dessous pour chaque séquence, où ils effectuent une corrélation des voies de réception deux à deux avec la voie de référence.

<u>1ère séquence 51 :</u>

Réception des éléments rayonnants des positions 1, 2, 3 et 4.

Calcul de $R_x(i)$ sur l'horizon temporel [0, nTr] :

$$R_x(0) = E(x_1(nT_r)x^*_1(nT_r))$$

$$R_x(1) = E(x_1(nT_r)x^*_2(nT_r))$$

$$R_x(2) = E(x_1(nT_r)x^*_3(nT_r))$$

$$R_x(3) = E(x_1(nT_r)x^*_4(nT_r))$$

2ème séquence 52 :

Réception des éléments rayonnants des positions 1, 5, 6 et 7.
Calcul de $R_X(i)$ sur l'horizon temporel [nTr, 2nTr] :

$$R_x(4) = E(x_1(2nT_r)x_5^*(2nT_r))$$

$$R_x(5) = E(x_1(2nT_r)x_6^*(2nT_r))$$

$$R_x(6) = E(x_1(2nT_r)x_7^*(2nT_r))$$

3ème séquence 53 :

Réception des éléments rayonnants des positions 1, 8, 9 et 10.
Calcul de $R_X(i)$ sur l'horizon temporel [3nTr, 4nTr] :

$$R_x(7) = E(x_1(3nT_r)x_8^*(3nT_r))$$

$$R_x(8) = E(x_1(3nT_r)x_9^*(3nT_r))$$

$$R_x(9) = E(x_1(3nT_r)x_{10}^*(3nT_r))$$

4ème séquence 54 :

Réception des éléments rayonnants des positions 1, 11, 12 et 13.
Calcul de $R_X(i)$ sur l'horizon temporel [4nTr, 5nTr] :

$$R_x(10) = E(x_1(4nT_r)x_{11}^*(4nT_r))$$

$$R_x(11) = E(x_1(4nT_r)x_{12}^*(4nT_r))$$

$$R_x(12) = E(x_1(4nT_r)x_{13}^*(4nT_r))$$

5ème séquence 55 :

Réception des éléments rayonnants des positions 1, 14, 15 et 16.

Calcul de $R_X(i)$ sur l'horizon temporel [5nTr, 6nTr] :

$$R_x(13) = E(x_1(5nT_r)x_{14}^*(5nT_r))$$

$$R_x(14) = E(x_1(5nT_r)x_{15}^*(5nT_r))$$

$$R_x(15) = E(x_1(5nT_r)x_{16}^*(5nT_r))$$

Finalement, l'estimation de la densité spectrale de puissance spatiale dans différentes directions $\theta_k$ permet de déterminer la direction d'arrivée de l'onde reçue, comme l'exprime la relation suivante :

$$S(\theta_k) = \sum_{i=0}^{15} R_x(i) \exp^{\frac{2.j.\pi.i.k}{16}} \qquad (8)$$

Le calcul peut également être effectué séquentiellement, en estimant à chaque séquence les sommes partielles et en les cumulant de séquence à séquence avant d'aboutir à la somme totale.

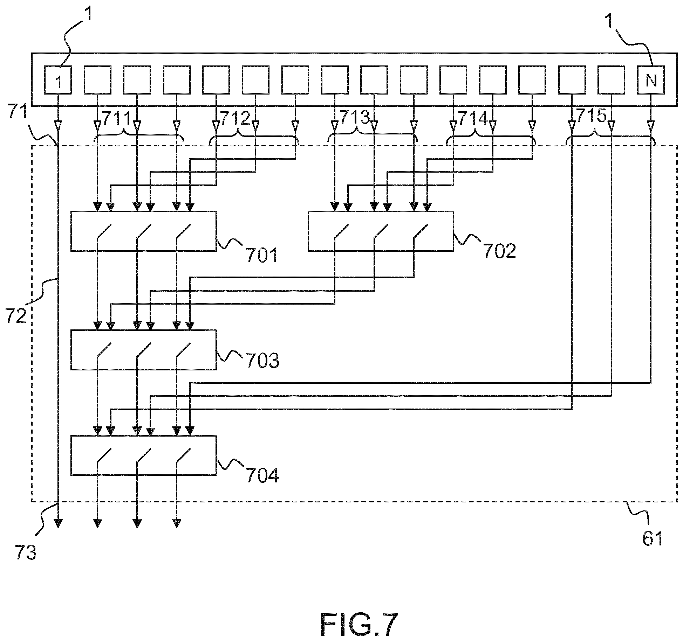

La figure 7 illustre un exemple de réalisation de la matrice de commutation 61. La matrice de commutation comporte N entrées et M sorties, plus particulièrement 16 entrées et 4 sorties dans l'exemple de la figure 7. Elle est réalisée à l'aide de blocs commutateurs 701, 702, 703, 704 à diodes PIN, du type SPXT. Chaque bloc comporte trois commutateurs élémentaires.

La première entrée 71 est reliée par une ligne directe 72 à une première sortie 73, permettant à l'élément rayonnant de référence d'être en permanence connecté au dispositif de réception. Les trois entrées suivantes 711 sont reliées chacune à un commutateur d'un premier bloc 701. Les trois entrées suivantes 712 sont reliées à ces mêmes commutateurs si bien que la 2ème entrée est commutée avec la 5ème entrée et ainsi de suite. Les trois entrées suivantes 713 sont reliées chacune à un commutateur d'un deuxième bloc 702. Les trois entrées suivantes 714 sont reliées à ces mêmes commutateurs si bien que la 8ème entrée est commutée avec la 12ème entrée et ainsi de suite. Les sorties du premier bloc 701 sont reliées chacune à un commutateur d'un troisième bloc 703. Les sortie du deuxième bloc 702 sont reliées à ces mêmes commutateurs, si bien que la première sortie du premier bloc 701 est commutée avec la première sortie du deuxième bloc 702 et ainsi de suite.

Les sorties du troisième bloc 703 sont reliées chacune à un commutateur d'un quatrième bloc 704. Les trois dernières entrées 715 de la matrice sont connectées à ces mêmes commutateurs si bien que la 14ème entrée est commutée avec la première sortie du troisième bloc 703 et ainsi de suite. Les sorties du 4ème bloc 704 sont connectées chacune à un récepteur 2, 3 du dispositif de réception.

L'architecture de la matrice de commutation de la figure 7 permet notamment de mettre en oeuvre les séquences de commutation illustrées par la figure 5. La première séquence est ainsi réalisée en commutant le premier bloc 701 sur les 2ème, 3ème et 4ème entrées, puis en commutant le troisième bloc 703 sur les sortie du premier bloc 701 et enfin en commutant le quatrième bloc 704 sur les sortie du troisième bloc 703.

L'invention s'applique notamment à la détection et à la localisation de signaux radar. Dans ce cadre, elle peut s'appliquer à un intercepteur actif de type radar ou à un intercepteur passif, par exemple de type RESM (Radar Electronic Support Measure), adapté à la détection de signaux à faible rapport signal à bruit et à impulsions de longue durée, typiquement supérieure à 100 μs.

Dans le cas d'un intercepteur actif de type radar, les caractéristiques temporelles et fréquentielles de signaux reçus sont connues. C'est le cas classiquement, en radar, où les signaux reçus font l'objet d'un filtrage adapté à la forme d'onde émise, ce filtrage permettant à la fois d'optimiser le rapport signal à bruit et de séparer ces signaux dans différentes cases distance et/ou Doppler avant détection. Dans ce cas, la corrélation spatiale est estimée après séparation temporelle des signaux reçus.

A l'issue de chaque période de traitement Tr, on dispose donc d'une matrice distance-Doppler dans laquelle se répartissent l'ensemble des signaux reçus. Si on considère, comme précédemment une antenne à N éléments rayonnant, à chaque élément rayonnant connecté au récepteur correspond à chaque période de traitement une matrice distance-Doppler. Le traitement de formation de faisceau décrit précédemment s'applique en parallèle sur chacune des sorties des cases distance-Doppler.

Dans le cas d'un intercepteur passif de type RESM, les caractéristiques temporelles et fréquentielles des signaux reçus sont inconnues. Un premier tri grossier des signaux est par exemple effectué par filtrage fréquentiel analogique, les récepteurs étant à bande limitée.

Après numérisation du signal, un second tri peut être effectué pour limiter à l'entrée du traitement la présence de signaux de courte durée, correspondant à des signaux non stationnaires. Ceci peut être réalisé en multipliant le signal reçu x(t) à l'instant t par un signal de pondération Pond, défini par la relation suivante :

$$Pond = x(t)x(t-\tau)/x(t)^{*2} \qquad (9)$$

où $\tau$ est un retard choisi pour supprimer les signaux de durée inférieure à la durée $\tau$.

Un troisième tri, plus fin, visant à séparer les signaux et à en optimiser le rapport signal à bruit est effectué par filtrage numérique, en fonction de leur fréquence centrale et de leur largeur de bande.

Cette opération s'effectue par exemple à l'aide de filtres FFT ou de filtres polyphasés de plusieurs largeurs différentes $\Delta F_l$. Par exemple, pour un récepteur de bande passante $\Delta F = 100$ MHz, on peut disposer d'une batterie de filtres de 25 MHz, d'une autre batterie de filtres de 12,5 MHz et d'une troisième batterie de filtres de 1,56 MHz pour le troisième tri, ces filtres pouvant être cascadés ou non.

Ainsi, si la période d'échantillonnage du signal est égale à Te = 1/2 $\Delta F$, on peut former l'ensemble de filtres suivant :

- 4 filtres de bande $\Delta F/4 = 25$ MHz avec une période de répétition de 4Te = 40 ns ;
- 8 filtres de bande $\Delta F/8 = 12,5$ MHz avec une période de répétition de 8Te = 80 ns ;
- 64 filtres de bande $\Delta F/64 = 1,56$ MHz avec une période de répétition de 64Te = 640 ns.

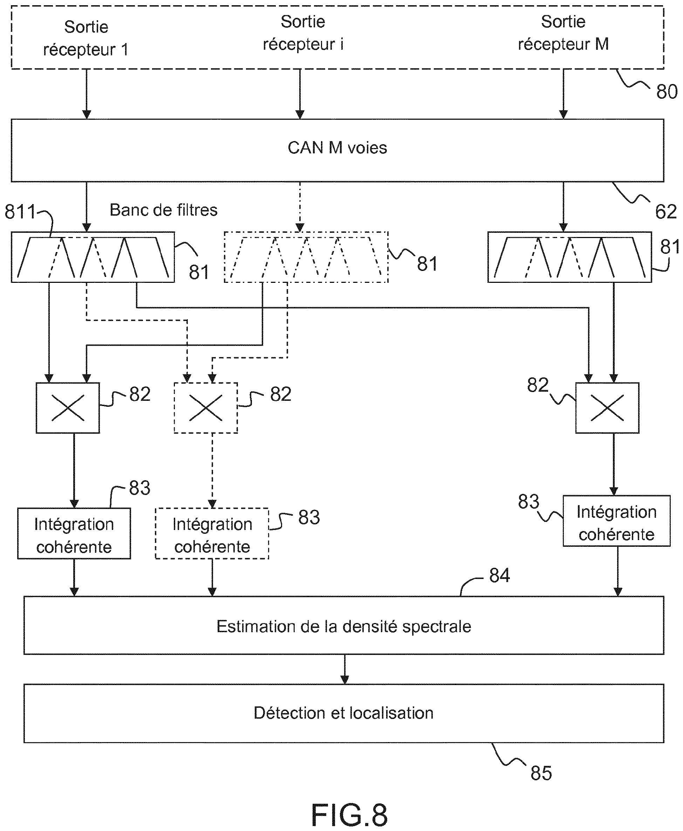

La figure 8 illustre un exemple de réalisation fonctionnel dans le cas d'une application à un intercepteur passif. Le dispositif est représenté en sorties 80 des M récepteurs. Les signaux de sorties des M récepteurs sont issus des N éléments rayonnants, via la matrice de commutation 61. Ils sont numérisés par le convertisseur analogique-numérique à M voies 62. Chaque voie de sortie de ce convertisseur est reliée à un banc de filtres 81. Ainsi, à chaque élément rayonnant d'ordre i, connecté au dispositif de réception à un instant T, correspond un ensemble de filtres 811 de fréquence central $F_m$ et de largeur de bande $\Delta F_l$. Un banc de filtre 81 comporte par exemple l'ensemble de filtres décrit ci-dessus.

Les termes de corrélation entre les signaux reçus des éléments rayonnants d'ordre i et d'ordre j, soit entre les voies i et j, sont obtenus en calculant la valeur moyenne du produit 83 de la sortie de chaque filtre $S_{m,l,i,k}$ connecté à la voie i à l'instant kT avec le conjugué de la sortie du filtre de même fréquence centrale et de même bande passante filtres connecté à la voie j à l'instant kT. Cela se traduit par la relation suivante :

$$R_{i,j,m,l}(pT) = E(S_{m,l,i,k}S^*_{m,l,j,k}) = \sum_{k=p}^{p+R}(S_{m,l,i,k}S_{m,l,j,k}^*) \qquad (10)$$

où :

- $s_{m,l,i,k}$ représente la sortie du filtre de fréquence centrale $F_m$, de largeur de bande $\Delta F_l$, connecté à la voie i à l'instant kT ;

- $S^*_{m,l,j,k}$ représente le conjugué de la sortie du filtre de fréquence centrale $F_m$, de largeur de bande $\Delta F_l$, connecté à la voie j à l'instant kT;

- RT représente l'intervalle de temps sur lequel est effectuée la moyenne ;

- pT représente le temps auquel est effectuée la moyenne ;

- $R_{i,j,m,l}(pT)$ représente la corrélation entre les signaux reçus des voies d'indice i et d'indice j pour les filtres de fréquence centrale $F_m$ et de bande $\Delta F_l$, à l'instant pT.

Les signaux étant supposés à bande étroite et constants en amplitude et en direction d'arrivée pendant le temps d'observation, les termes de corrélation sont indépendants du temps, soit :

$$R_{i,j,m,l}(pT) = R_{i,j,m,l} \qquad\qquad (11)$$

L'ensemble des termes de corrélation est ainsi estimé 82 selon un ensemble de séquences successives pendant lesquelles le dispositif de réception à M voies est connecté successivement aux différents éléments rayonnants constituant l'antenne.

L'ensemble des résultats est alors sommé de façon cohérente 83 pour chaque direction de l'espace et pour chaque filtre.

Si on pose $R_{i,m,l} = R_{j,j+i,m,l}$, la corrélation des signaux provenant des éléments rayonnants j et j+i pour les filtres de fréquence centrale $F_m$ et de bande $\Delta F_l$, l'estimation de la densité spectrale de puissance spatiale 84 en sortie des filtres de fréquence centrale $F_m$ et de bande $\Delta F_l$ s'écrit pour la direction $\theta_k$ :

$$S(\theta_k) = \sum_{i=0}^{N} R_{i,m,l} \exp^{-\frac{2\pi j i k}{N}} \qquad (12)$$

Le résultat de cette estimation est ensuite utilisé pour détecter puis localiser angulairement les signaux reçus 85, selon les principes classiques en traitement radar. Les moyens de traitement réalisent notamment les bancs de filtre 81, les corrélations 82, les intégrations cohérentes 83 et l'estimation de la densité spectrale dans les différentes directions liées aux éléments d'antenne.

Typiquement, dans l'exemple d'une antenne à 16 voies selon le schéma de la figure 6 qui utilise un récepteur à 4 voies simultanées, 5 séquences sont nécessaires pour calculer tous les termes de corrélation permettant la formation de faisceaux, comme le montrent les estimations de ces termes $R_x(i)$ dans les séquences 51, 52, 53, 54, 55 décrites précédemment.

Si par ailleurs on s'intéresse à l'analyse de signaux de durée supérieure à 100 µs, on peut allouer 20 µs par séquence, c'est-à-dire estimer chaque terme de corrélation pendant un temps total RT=20 µs.

Si par exemple, on réalise la séparation angulaire dans chaque filtre de bande $\Delta F/4 = 25$ Mhz, on dispose du signal en sortie de chaque filtre d'un échantillon toutes les 40 ns et la moyenne des termes produits peut être effectuée sur 500 échantillons successifs.

En plus de la séparation angulaire, ce procédé permet une intégration temporelle cohérente du signal reçu pendant un temps voisin de la durée totale de ce signal, ce qui est très intéressant pour détecter les signaux à faible puissance crête (de type LPI) et notamment de modulation quelconque. Avantageusement, l'intégration des différents termes de corrélation peut être adaptée pour détecter des signaux à impulsions de longue durée, par exemple supérieure à 100 µs, de faible puissance crête, par exemple inférieure à quelques watts, et de modulation inconnue quelconque.

**Revendications**

**1.** Dispositif de détection de signaux électromagnétiques comportant une antenne de réception réseau (10) à N éléments rayonnants (1), comportant M voies de réception (2, 3) en aval de l'antenne de réception, M étant inférieur à N, les directions de pointage de ladite antenne, en nombre égal au nombre N d'éléments rayonnants, étant obtenues par formation de faisceau par le calcul et étant régulièrement espacées, ledit dispositif comporte au moins :

- des moyens de commutation (61) des M voies de réception sur les éléments rayonnants selon des cycles de séquences successives (51, 52, 53, 54, 55), M éléments rayonnants étant connectés auxdites voies de réceptions à chaque séquence, un même élément rayonnant (50) dit de référence étant connecté auxdites voies de réception pour toutes les séquences, un cycle étant achevé lorsque tous les éléments rayonnants ont été connectés au moins une fois à une desdites voies de réception ;

- **caractérisé en ce que** ledit dispositif comporte des moyens de traitement (63, 82, 83, 84) effectuant pour chaque séquence l'estimation des corrélations spatiales deux à deux du signal reçu sur la voie de référence et des signaux reçus sur les autres M-1 voies de réception puis estimant la densité spectrale de puissance spatiale dans lesdites N directions de pointage à partir d'une somme cohérente des N termes de corrélations ainsi obtenus.

**2.** Dispositif selon la revendication 1, **caractérisé en ce que** le réseau d'éléments rayonnants étant linéaire, l'élément de référence (50) est le premier élément, les M premiers éléments étant connectés aux voies de réception dans la première séquence, puis les M-1 éléments rayonnants étant connectés aux voies de réception dans la deuxième séquence, et ainsi de suite.

3. Dispositif selon la revendication précédente, **caractérisé en ce que** les moyens de traitement estiment les corrélations spatiales après avoir effectué l'élimination des signaux de courte durée stationnaire de durée inférieure à une durée τ donnée, l'élimination des signaux de courte durée stationnaire étant effectuée en multipliant le signal reçu à un temps t, x(t), par un signal de la forme $x(t)x(t-\tau)/x(t)^{*2}$, où τ est un retard choisi pour supprimer les signaux de durée inférieure à la durée τ.

4. Dispositif selon l'une quelconque des revendications précédentes, **caractérisé en ce que**, dans chaque séquence, ladite corrélation spatiale est estimée en multipliant directement le signal reçu sur ledit élément rayonnant de référence par le signal reçu conjugué sur un autre élément rayonnant de l'antenne.

5. Dispositif selon l'une quelconque des revendications 1 à 3, **caractérisé en ce que**, dans chaque séquence, ladite corrélation spatiale est estimée en multipliant le signal reçu sur ledit élément rayonnant de référence par le signal reçu conjugué sur un autre élément rayonnant de l'antenne, après séparation fréquentielle desdits signaux reçus.

6. Dispositif selon la revendication 5, **caractérisé en ce que**, dans chaque séquence, ladite corrélation spatiale est estimée en multipliant le signal reçu sur ledit élément rayonnant de référence par le signal reçu conjugué sur un autre élément rayonnant de l'antenne, l'estimation de corrélation étant effectuée en sortie de bancs de filtres (81) de différentes largeurs et de différentes fréquences centrales.

7. Dispositif selon la revendication 6, **caractérisé en ce que** les filtres sont réalisés par transformées de Fourier numérique d'ordres différents.

8. Dispositif selon la revendication 6, **caractérisé en ce que** les filtres sont réalisés par filtres polyphasés d'ordres différents.

9. Dispositif selon l'une quelconque des revendications 1 ou 2, **caractérisé en ce que** ledit dispositif est un radar.

10. Dispositif selon la revendication 9, **caractérisé en ce que**, dans chaque séquence, ladite corrélation spatiale est estimée en multipliant le signal reçu sur ledit élément rayonnant de référence par le signal reçu conjugué sur un autre élément rayonnant de l'antenne, après séparation temporelle desdits signaux reçus.

11. Dispositif selon la revendication 10, **caractérisé en ce que** la séparation temporelle est obtenue par filtrage adapté et échantillonnage des impulsions reçues par ledit radar.

## Patentansprüche

1. Vorrichtung zur Erkennung von elektromagnetischen Signalen, umfassend eine Netzempfangsantenne (10) mit N Strahlerelementen (1), **dadurch gekennzeichnet, dass** sie M Empfangskanäle (2, 3) der Empfangsantenne nachgelagert umfasst, wobei M kleiner ist als N, wobei die Ausrichtungen der Antenne, die hinsichtlich der Anzahl einer Anzahl N von Strahlerelementen entsprechen, durch die Bildung eines Bündels durch die Berechnung erhalten werden und regelmäßig beabstandet sind, wobei die Vorrichtung mindestens Folgendes umfasst:

- Schaltmittel (61) der M Empfangskanäle an den Strahlerelementen gemäß aufeinanderfolgenden Sequenzzyklen (51, 52, 53, 54, 55), wobei M Strahlerelemente mit den Empfangskanälen in jeder Sequenz verbunden sind, wobei ein gleiches Referenzstrahlerelement (50) mit den Empfangskanälen für alle Sequenzen verbunden ist, wobei ein Zyklus abgeschlossen ist, wenn alle Strahlerelemente mindestens einmal mit einem der Empfangskanäle verbunden wurden;
- Verarbeitungsmittel (63, 82, 83, 84), die für jede Sequenz paarweise die Schätzung der räumlichen Korrelationen des auf dem Referenzkanal empfangenen Signals und der auf den anderen M-1 Empfangskanälen empfangenen Signale durchführen und dann die Spektraldichte der räumlichen Kraft in den N Ausrichtungen auf Grundlage einer kohärenten Summe von N auf diese Weise erhaltenen Korrelationstermen schätzen.

2. Vorrichtung nach Anspruch 1, **dadurch gekennzeichnet, dass** das Netz der Strahlerelemente linear ist, wobei das Referenzelement (50) das erste Element ist, wobei die M ersten Elemente mit den Empfangskanälen in der ersten Sequenz verbunden sind, wobei dann die M-1 Strahlerelemente mit den Empfangskanälen in der zweiten Sequenz verbunden sind und so weiter.

3. Vorrichtung nach dem vorhergehenden Anspruch, **dadurch gekennzeichnet, dass** die Verarbeitungsmittel die räumlichen Korrelationen schätzen, nachdem sie die Beseitigung der stationären Kurzzeitsignale mit einer Dauer, die kürzer ist als eine gegebene Dauer τ, durchgeführt haben, wobei die Beseitigung der stationären Kurzzeitsignale durchgeführt wird, indem das zu einem Zeitpunkt t empfangene Signal, x(t), mit einem Signal der Form x(t)x(t-τ)/x(t)*² multipliziert wird, wobei τ eine Verzögerung ist, die ausgewählt wird, um die Signale mit einer Dauer, die kürzer ist als die Dauer τ, auszulassen.

4. Vorrichtung nach einem der vorhergehenden Ansprüche, **dadurch gekennzeichnet, dass** in jeder Sequenz die räumliche Korrelation geschätzt wird, indem das an dem Referenzstrahlerelement empfangene Signal direkt mit dem gekoppelten Signal multipliziert wird, das an einem anderen Strahlerelement der Antenne empfangen wird.

5. Vorrichtung nach einem der Ansprüche 1 bis 3, **dadurch gekennzeichnet, dass** in jeder Sequenz die räumliche Korrelation geschätzt wird, indem nach einer Frequenztrennung der empfangenen Signale das an dem Referenzstrahlerelement empfangene Signal mit dem gekoppelten Signal multipliziert wird, das an einem anderen Strahlerelement der Antenne empfangen wird.

6. Vorrichtung nach Anspruch 5, **dadurch gekennzeichnet, dass** in jeder Sequenz die räumliche Korrelation geschätzt wird, indem das an dem Referenzstrahlerelement empfangene Signal mit dem gekoppelten Signal multipliziert wird, das an einem anderen Strahlerelement der Antenne empfangen wird, wobei die Schätzung der Korrelation beim Verlassen von Filterbänken (81) mit unterschiedlicher Breite und mit unterschiedlichen Mittenfrequenzen durchgeführt wird.

7. Vorrichtung nach Anspruch 6, **dadurch gekennzeichnet, dass** die Filter durch eine Umformung von Fourier-Zahlen unterschiedlicher Ordnung umgesetzt werden.

8. Vorrichtung nach Anspruch 6, **dadurch gekennzeichnet, dass** die Filter durch Mehrphasenfilter unterschiedlicher Ordnung umgesetzt werden.

9. Vorrichtung nach einem der Ansprüche 1 oder 2, **dadurch gekennzeichnet, dass** die Vorrichtung ein Radar ist.

10. Vorrichtung nach Anspruch 9, **dadurch gekennzeichnet, dass** in jeder Sequenz die räumliche Korrelation geschätzt wird, indem nach einer zeitlichen Trennung der empfangenen Signale das an dem Referenzstrahlerelement empfangene Signal mit dem gekoppelten Signal multipliziert wird, das an einem anderen Strahlerelement der Antenne empfangen wird.

11. Vorrichtung nach Anspruch 10, **dadurch gekennzeichnet, dass** die zeitliche Trennung durch eine angepasste Filtration und eine Probennahme der von dem Radar empfangenen Impulse erhalten wird.

**Claims**

1. A device for detecting electromagnetic signals comprising a reception array antenna (10) with N radiating elements (1), **characterised by** comprising M reception channels (2, 3) downstream of the reception antenna, with M being less than N, the pointing directions of said antenna, which are equal in number to the number N of radiating elements, being obtained through beam forming by computation and being evenly spaced apart, said device comprising at least:

  - means (61) for switching the M reception channels on the radiating elements according to cycles of successive sequences (51, 52, 53, 54, 55), with M radiating elements being connected to said reception channels for each sequence, the same radiating element (50), called reference radiating element, being connected to said reception channels for all the sequences, a cycle being completed when all the radiating elements have been connected at least once to one of said reception channels;
  - processing means (63, 82, 83, 84) estimating, for each sequence, the pairwise spatial correlations of the signal received on the reference channel and the signals received on the other M-1 reception channels, then estimating the spatial power spectral density in said N pointing directions on the basis of a coherent sum of the N correlation terms thus obtained.

**2.** The device according to claim 1, **characterised in that**, with the array of radiating elements being linear, the reference element (50) is the first element, the M first elements being connected to the reception channels in the first sequence, then the M-1 radiating elements being connected to the reception channels in the second sequence, and so on.

**3.** The device according to the preceding claim, **characterised in that** the processing means estimate the spatial correlations after having estimated the short-duration stationary signals having a duration that is less than a given duration $\tau$, the elimination of the short-duration stationary signals being carried out by multiplying the signal received at a time t, x(t), by a signal in the form x(t)x(t-$\tau$)/x(t)*$^2$, where $\tau$ is a delay selected to remove the signals having a duration that is less than the duration $\tau$.

**4.** The device according to any one of the preceding claims, **characterised in that**, in each sequence, said spatial correlation is estimated by directly multiplying the signal received on said reference radiating element by the conjugated signal received on another radiating element of the antenna.

**5.** The device according to any one of claims 1 to 3, **characterised in that**, in each sequence, said spatial correlation is estimated by multiplying the signal received on said reference radiating element by the conjugated signal received on another radiating element of the antenna, after frequency splitting said received signals.

**6.** The device according to claim 5, **characterised in that**, in each sequence, said spatial correlation is estimated by multiplying the signal received on said reference radiating element by the conjugated signal received on another radiating element of the antenna, the correlation estimation being carried out at the output of filter banks (81) with various widths and various central frequencies.

**7.** The device according to claim 6, **characterised in that** the filters are implemented by digital Fourier transforms having different orders.

**8.** The device according to claim 6, **characterised in that** the filters are implemented by polyphase filters having different orders.

**9.** The device according to any one of claims 1 or 2, **characterised in that** said device is a radar.

**10.** The device according to claim 9, **characterised in that**, in each sequence, said spatial correlation is estimated by multiplying the signal received on said reference radiating element by the conjugated signal received on another radiating element of the antenna, following temporal separation of said received signals.

**11.** The device according to claim 10, **characterised in that** the temporal separation is obtained by matched filtering and sampling of the pulses received by said radar.

FIG.1

FIG.2

FIG.3

FIG.4a

FIG.4b

FIG.5

FIG.6

FIG.7

FIG.8

**EP 3 022 573 B1**

## RÉFÉRENCES CITÉES DANS LA DESCRIPTION

**Documents brevets cités dans la description**

- FR 2805614 A1